# EUROPÄISCHE PATENTSCHRIFT

(11) **EP 3 676 565 B1**
(45) Veröffentlichungstag und Bekanntmachung des Hinweises auf die Patenterteilung: **24.11.2021**
(21) Anmeldenummer: 18727189.5
(22) Anmeldetag: 14.05.2018
(51) Int. Cl.: G01C 21/32, B61L 25/02, G01C 21/00, G01C 21/30

(54) **VERFAHREN ZUR ERZEUGUNG EINES ABBILDES EINES STRECKENNETZES, VERWENDUNG DES VERFAHRENS, COMPUTERPROGRAMM UND COMPUTERLESBARES SPEICHERMEDIUM**
METHOD FOR GENERATING AN IMAGE OF A TRANSPORT NETWORK, USAGE OF THIS METHOD, COMPUTER PROGRAM AND COMPUTER READABLE STORAGE MEDIUM
PROCÉDÉ POUR LA GÉNERATION D'UNE IMAGE D'UN RÉESEAU FERROVIAIRE, UTILISATION DE CETTE PROCÉDÉ, PROGRAMME INFORMATIQUE ET SUPPORT D'INFORMATIONS LISIBLE PAR ORDINATEUR

(30) Priorität: 30.06.2017 DE 102017211120
(43) Veröffentlichungstag der Anmeldung: 08.07.2020
(73) Patentinhaber: Siemens Mobility GmbH, 81739 München (DE)
(72) Erfinder: AUFDERHEIDE, Helge, 80634 München (DE); FECHTIG, Marco, 79777 Ühlingen-Birkendorff (DE)
(86) Internationale Anmeldenummer: PCT/EP2018/062368
(87) Internationale Veröffentlichungsnummer: WO 2019/001825

(56) Entgegenhaltungen:
- DE-A1-102012 219 111
- DE-A1-102015 214 425
- JP-A- 2009 063 445

## Beschreibung

Die Erfindung betrifft ein Verfahren zur Erzeugung eines Abbildes eines Streckennetzes, welches von einem Schienenfahrzeug befahren wird.

Derzeit wird unter Verwendung eines Navigationssatellitensystems (z. B. GPS) und/oder unter Verwendung von Balisen, welche in die Strecken integriert sind, das von einem Schienenfahrzeug befahrene Streckennetz ermittelt. Dabei erhält das Schienenfahrzeug (von dem Navigationssatellitensystem und/oder von den Balisen) regelmäßig eine Standortinformation. Unter Verwendung der Standortinformationen kann das befahrene Streckennetz ermittelt werden. Beispielsweise kann unter Verwendung der Standortinformationen ein Abbild des befahrenen Streckennetzes erzeugt werden.

In Tunneln und/oder in einem Tunnelsystem kann ein Schienenfahrzeug keine Verbindung zu einem Satelliten herstellen. Insbesondere bei U-Bahnen kann aus diesem Grund das Navigationssatellitensystem nicht zur Ermittlung des befahrenen Streckennetzes herangezogen werden.

Werden Balisen in Strecken integriert, so senden die Balisen Standortinformationen an das vorbeifahrende Schienenfahrzeug. Das Schienenfahrzeug erwartet an den entsprechenden Orten die jeweilige Standortinformation der jeweiligen Balise. Fällt eine Balise aus, so sendet diese Balise keine Standortinformation. Dies kann zu Verzögerungen des Schienenfahrzeugs führen, da das Schienenfahrzeug auf die Standortinformation wartet.

Die DE 10 2012 219111 A1 offenbart ein Verfahren zur Lokalisierung eines Schienenfahrzeugs innerhalb eines Schienennetzes, das durch sich ortsabhängig verändernde physikalische Parameter charakterisiert ist. Die JP 2009 063445 A betrifft ein Verfahren zur Positionierung anhand gespeicherter Reisemuster.

Eine Aufgabe der Erfindung ist es, ein verbessertes Verfahren zum Ermitteln eines von einem Schienenfahrzeug befahrenen Streckennetzes anzugeben.

Die Aufgabe wird gelöst durch ein Verfahren zur Erzeugung eines Abbildes eines Streckennetzes, welches von einem Schienenfahrzeug befahren wird, unter Verwendung von beim Befahren des Streckennetzes durch das Schienenfahrzeug aufgezeichneten und in einer Aktivitätenfolge sortierten Aktivitäten, bei dem erfindungsgemäß Muster in der Aktivitätenfolge unter Verwendung eines Mustererkennungsverfahrens erkannt werden und unter Verwendung der erkannten Muster das Abbild des Streckennetzes erzeugt wird.

Üblicherweise werden Aktivitäten eines Schienenfahrzeugs während dem Befahren eines Schienennetzes aufgezeichnet. Die Idee der Erfindung besteht darin, diese Daten zur Erzeugung eines Abbildes des Streckennetzes zu nutzen.

Die Erfindung bietet den Vorteil, dass ein Abbild des Streckennetzes unabhängig von Balisen und unabhängig von einem Navigationssatellitensystem erstellt werden kann. Die bisherige Infrastruktur, wie Balisen und/oder GPS-Satelliten, sowie dazugehörige Empfänger, werden zur Erzeugung des Abbildes des Streckennetzes nicht benötigt. Auf diese Weise können Kosten (Anschaffungskosten, Wartungskosten, Datenübertragungskosten etc.) eingespart werden.

Zweckmäßigerweise ist das Streckennetz ein Schienenstreckennetz.

Die Aktivitäten können beim Befahren des Streckennetzes durch das Schienenfahrzeug zu der Aktivitätenfolge sortiert werden.

Außerdem können die Aktivitäten nach dem Befahren des Streckennetzes durch das Schienenfahrzeug zu der Aktivitätenfolge sortiert werden.

Es ist bevorzugt, wenn die Aktivitäten in der Aktivitätenfolge nach einem vorgebbaren Kriterium sortiert vorliegen. Das heißt, die in der Aktivitätenfolge sortierten Aktivitäten können nach dem vorgebbaren Kriterium sortiert sein. Insbesondere können die Aktivitäten in der Aktivitätenfolge zeitlich sortiert vorliegen/sein.

Zweckmäßigerweise wird unter Verwendung des Mustererkennungsverfahrens für zumindest einen Teil der erkannten Muster zumindest ein Merkmal des jeweiligen Musters ermittelt. Beispielsweise kann unter Verwendung des Mustererkennungsverfahrens für zumindest einen Teil der erkannten Muster eine Häufigkeit, eine Länge und/oder eine Form des jeweiligen Musters ermittelt werden. Das heißt, das zumindest eine Merkmal des jeweiligen Musters kann eine Häufigkeit, eine Länge und/oder eine Form des jeweiligen Musters sein. Zweckmäßigerweise wird unter Verwendung des zumindest einen Merkmals des jeweiligen Musters das Abbild des Streckennetzes erzeugt. Auf diese Weise kann unter Verwendung der erkannten Muster anhand des zumindest einen Merkmals des jeweiligen Musters das Abbild des Streckennetzes erzeugt werden.

Vorzugsweise wird für zumindest einen Teil der erkannten Muster das jeweilige Muster anhand seiner Häufigkeit, seiner Länge und/oder seiner Form als ein bestimmter Streckenabschnitt des Streckennetzes identifiziert.

Eine Häufigkeit kann eine absolute Häufigkeit, insbesondere eine Anzahl, oder eine relative Häufigkeit, insbesondere eine Prozentzahl, sein. Als eine Länge eines jeweiligen Musters kann die Anzahl an Aktivitäten in dem jeweiligen Muster verstanden werden. Die Form eines Musters kann beispielsweise eine symmetrische Form, insbesondere eine spiegelbildliche Form, sein.

Als Muster kann eine häufig wiederkehrende Abfolge von Aktivitäten, welche eine vorgegebene Mindestanzahl von Aktivitäten umfasst, erkannt werden. Die häufig wiederkehrende Abfolge von Aktivitäten, welche eine vorgegebene Mindestanzahl von Aktivitäten umfasst, kann als Hauptstrecke des Streckennetzes identifiziert werden. Eine häufige Abfolge von Aktivitäten kann eine häufigste Abfolge von Aktivitäten sein. Weiter kann eine häufige Abfolge von Aktivitäten eine Abfolge von Aktivitäten mit einer vorgegebenen Mindesthäufigkeit sein.

Als Muster kann ein spiegelbildliches Muster, welches eine vorgegebene Mindestanzahl von Aktivitäten umfasst, erkannt werden. Das spiegelbildliche Muster, welches eine vorgegebene Mindestanzahl von Aktivitäten umfasst, kann einen Spiegelpunkt aufweisen. Vorzugsweise wird der Spiegelpunkt als ein Umkehrpunkt innerhalb des Streckennetzes identifiziert.

Falls unter Verwendung des Mustererkennungsverfahrens ein Teil einer Abfolge von Aktivitäten eindeutig einem bereits identifizierten Streckenabschnitt des Streckennetzes zugeordnet wird und ein zweiter Teil derselben Abfolge von dem bereits identifizierten Streckenabschnitt abweicht, wird zweckmäßigerweise der zweite Teil als eine Abzweigung von der identifizierten Strecke erkannt. Sinnvollerweise wird die Abzweigung als Teil des Streckennetzes erkannt.

In einer vorteilhaften Ausgestaltung der Erfindung werden in der Aktivitätenfolge die Aktivitäten durch alphanummerische Symbole codiert. Als ein alphanummerisches Symbol kann ein einziges alphanummerisches Zeichen oder eine Folge mehrerer alphanummerischer Zeichen aufgefasst werden.

Das Mustererkennungsverfahren kann beispielsweise einen Sequenz Matching Algorithmus, insbesondere einen Sequenz Alignment Algorithmus, umfassen. Der Sequenz Alignment Algorithmus kann in ähnlicher Weise verwendet werden, wie für eine DNA-Analyse. Insbesondere kann der Sequenz Alignment Algorithmus ein Free-Shift Alignment umfassen. Weiter kann der Sequenz Alignment Algorithmus ein, insbesondere an die Erzeugung eines Abbildes eines Streckennetzes, angepasster Algorithmus sein.

Zweckmäßigerweise erlaubt das Mustererkennungsverfahren in einem vorgegebenen Maß Toleranzen. Auf diese Weise können bereits ähnliche Abfolgen von Aktivitäten als gleiches Muster erkannt werden. Das heißt, das Mustererkennungsverfahren kann in einem vorgegebenen Maß Abweichungen erlauben, sodass bereits ähnliche Abfolgen von Aktivitäten als gleiche Muster erkannt werden. Beispielsweise können zwei Abfolgen von Aktivitäten, welche sich wie Bild und Spiegelbild zueinander verhalten, als gleiches Muster erkannt werden. Weiter können beispielsweise zwei Abfolgen von Aktivitäten als gleiches Muster erkannt werden, wenn sich die beiden Abfolgen in einer Maximalanzahl von Aktivitäten, insbesondere in genau einer Aktivität, um ein vorgegebenes Maß unterscheiden.

Als Aktivitäten werden dabei insbesondere diejenigen Ereignisse aufgefasst, die vom Schienenfahrzeug oder dessen Komponenten ausführt werden und die sich entsprechend von passiven Ereignissen, wie dem Empfangen externer Signale, wie z.B. GPS- oder Balisensignale, unterscheiden.

Erfindungsgemäß umfassen die Aktivitäten des Schienenfahrzeugs ein Halten des Schienenfahrzeugs sowie ein Fahren einer Fahrstrecke einer bestimmten Länge.

Das Halten des Schienenfahrzeugs kann ein Halten ohne ein Türöffnen sein. Weiter kann das Halten des Schienenfahrzeugs ein Halten mit einem Öffnen einer rechten Tür des Schienenfahrzeugs sein. Ferner kann das Halten des Schienenfahrzeugs ein Halten mit einem Öffnen einer linken Tür des Schienenfahrzeugs sein. Außerdem kann das Halten des Schienenfahrzeugs ein Halten mit einem Öffnen beider Türen des Schienenfahrzeugs sein.

Zweckmäßigerweise wird das Abbild eines Streckennetzes automatisch erzeugt. Insbesondere kann das Abbild des Streckennetzes vollautomatisch und/oder teilautomatisch, insbesondere unter Verwendung eines auf einem Computer ausgeführten Computerprogramms, erzeugt werden. Bei einer teilautomatischen Erzeugung des Abbildes kann ein Teilschritt anderweitig als von dem Computer selbst ausgeführt werden, beispielsweise von einer handelnden Person. Bei einer vollautomatischen Erzeugung des Abbildes kann das Abbild ohne manuelles Einwirken einer Person erzeugt werden.

Die Erfindung betrifft außerdem eine Verwendung des zuvor genannten Verfahrens zur Lokalisierung des Schienenfahrzeugs zu einem vorgegebenen Zeitpunkt. Bei der Verwendung des Verfahrens wird eine weitere Aktivitätenfolge des Schienenfahrzeugs, welche zweckmäßigerweise eine bestimmte Anzahl an Aktivitäten um den vorgegebenen Zeitpunkt aufweist, mit dem erstellten Abbild des Streckennetzes verglichen. Anhand des Vergleichs kann das Schienenfahrzeug einen bestimmten Streckenabschnitt des Streckennetzes zugeordnet werden. Auf diese Weise kann das Schienenfahrzeug lokalisiert werden.

Die weitere Aktivitätenfolge ist zweckmäßigerweise eine andere Aktivitätenfolge als die erstgenannte, zur Erzeugung des Abbildes des Streckennetzes genutzte Aktivitätenfolge. Vorzugsweise umfasst die weitere Aktivitätenfolge beim Befahren des Streckennetzes durch das Schienenfahrzeug aufgezeichnete und sortierte Aktivitäten. In der weiteren Aktivitätenfolge liegen die Aktivitäten zweckmäßigerweise nach demselben Kriterium sortiert vor wie in der erstgenannten Aktivitätenfolge.

Der Vorteil besteht darin, dass das Schienenfahrzeug zu dem vorgegebenen Zeitpunkt, z. B. einem Zeitpunkt eines Events bzw. eines Vorfalls, ohne GPS-Daten sowie ohne von Balisen übermittelten Standortinformationen lokalisiert werden kann. Beispielsweise kann auf diese Weise auch ein Defekt einer Balise festgestellt werden.

Zweckmäßigerweise erfolgt die Lokalisierung des Schienenfahrzeugs automatisch. Insbesondere kann die Lokalisierung des Schienenfahrzeugs vollautomatisch und/oder teilautomatisch, insbesondere unter Verwendung eines auf einem Computer ausgeführten Computerprogramms, durchgeführt werden.

Ferner betrifft die Erfindung ein Computerprogramm mit Befehlen, welche, wenn das Computerprogramm auf einem Computer ausgeführt wird, diese veranlassen, das zuvor genannte Verfahren auszuführen.

Weiter betrifft die Erfindung ein computerlesbares Speichermedium mit Befehlen, welche, wenn sie durch einen Computer ausgeführt werden, diesen Computer veranlassen, das zuvor genannte Verfahren auszuführen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Computerprogramm und dem erfindungsgemäßen computerlesbaren Speichermedium kombinierbar. So sind Verfahrensmerkmale auch als Eigenschaft des Computerprogramms und/oder des computerlesbaren Speichemediums gegenständlich formuliert zu sehen und umgekehrt.

Auch wenn in der Beschreibung beziehungsweise in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Flussdiagramm über ein Verfahren zur Erzeugung eines Abbildes eines Streckennetzes und
- FIG 2: ein Flussdiagramm über die Verwendung des Verfahrens aus FIG 1 zur Lokalisierung des Schienenfahrzeugs zu einem vorgegebenen Zeitpunkt.

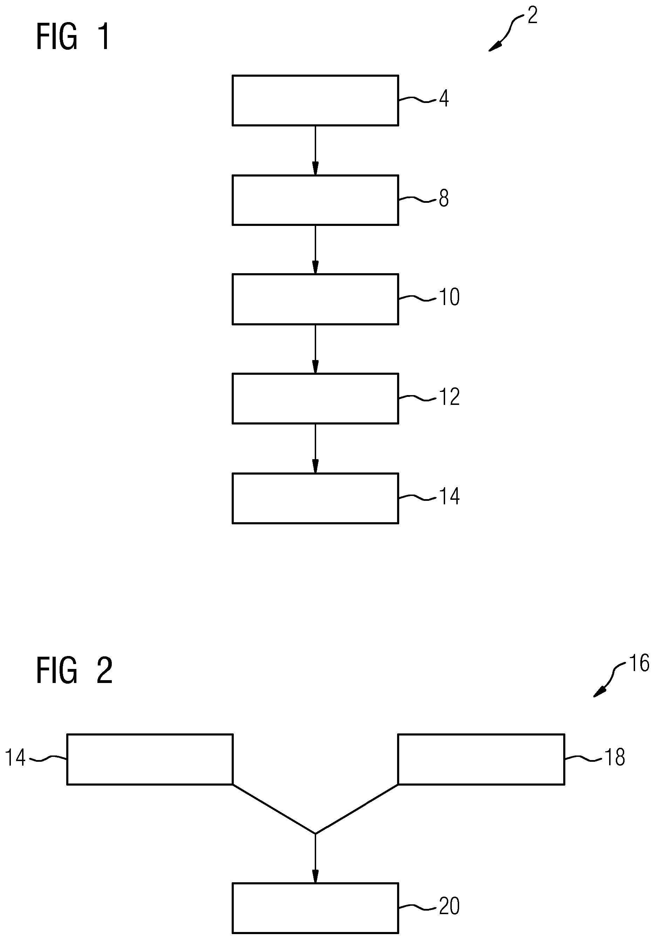

FIG 1 zeigt ein Flussdiagramm 2, welches ein Verfahren zur Erzeugung eines Abbildes eines Streckennetzes verdeutlicht. Das Streckennetz wird von einem Schienenfahrzeug befahren. Beim Befahren des Streckennetzes werden durch das Schienenfahrzeug Aktivitäten aufgezeichnet, welche in einer Aktivitätenfolge 4 sortierten werden. Die Aktivitäten liegen in der Aktivitätenfolge 4 zeitlich sortiert vor. Außerdem werden/sind in der Aktivitätenfolge 4 die Aktivitäten durch alphanumerische Symbole codiert.

Eine Aktivitätenfolge 4 könnte beispielsweise wie folgt lauten:
05-R-03-L-02-B-10-R-10-B-02-L-03-R-05-X-05-R-03-L-02-B-07-L-11-B-01-X

In diesem Beispiel umfassen die Aktivitäten ein Fahren einer Fahrstrecke einer bestimmten Länge, was hier beispielsweise durch eine zwei-ziffrige Zahl codiert wird. Die Zahl entspricht der gerundeten Länge der Fahrstrecke in Kilometern. Auch eine andere alphanumerische Codierung wäre möglich.

Weiter umfassen in diesem Beispiel die Aktivitäten ein Halten des Schienenfahrzeugs, was in diesem Beispiel durch einen Buchstaben codiert wird. In diesem Beispiel wird ein Halten ohne ein Türöffnen durch ein "X", ein Halten mit einem Öffnen einer rechten Tür des Schienenfahrzeugs durch ein "R", ein Halten mit einem Öffnen einer linken Tür des Schienenfahrzeug durch eine "L" und ein Halten mit einem Öffnen beider Türen des Schienenfahrzeugs durch ein "B" codiert.

Unter Verwendung eines Mustererkennungsverfahrens werden Muster 8 in der Aktivitätenfolge 4 erkannt. Das Mustererkennungsverfahren erlaubt in einem vorgegebenen Maß Toleranzen. Beispielsweise werden zwei Abfolgen von Aktivitäten, welche sich wie Bild und Spiegelbild zueinander verhalten, als gleiches Muster erkannt. Das heißt, die Leserichtung in der Aktivitätenfolge 4 ist egal. Auf diese Weise wird beispielsweise die Abfolge von Aktivitäten 05-R-03-L-02-B-10 und die Abfolge von Aktivitäten 10-B-02-L-03-R-05 als gleiches Muster erkannt.

Weiter wird unter Verwendung des Mustererkennungsverfahrens für zumindest einen Teil der erkannten Muster 8 zumindest ein Merkmal 10 des jeweiligen Musters 8, nämlich eine Häufigkeit, eine Länge und/oder eine Form des jeweiligen Musters 8, ermittelt. Die Häufigkeit ist eine absolute Häufigkeit. Eine Länge ist eine Anzahl an Aktivitäten des jeweiligen Musters.

Erkannte Muster 8 und deren ermittelte Merkmale 10 können beispielsweise wie folgt lauten:

| Muster | Länge | Häufigkeit | Form |
|---|---|---|---|
| 05-R-03-L-02-B-10-R- | | | |
| 10-B-02-L-03-R-05 | 15 | 1 | Spiegelbild |
| B-02-L-03-R-05-X- | | | |
| 05-R-03-L-02-B | 13 | 1 | Spiegelbild |
| 05-R-03-L-02-B-10 | 7 | 2 | |
| 05-R-03-L-02 | 5 | 3 | |

Das Mustererkennungsverfahren erlaubt in einem vorgegebenen Maß weitere Toleranzen. Auf diese Weise werden ähnliche Abfolgen von Aktivitäten, im Folgenden auch Abfolgen, als gleiches Muster erkannt. Beispielsweise werden zwei Abfolgen von Aktivitäten als gleiches Muster erkannt, wenn sich die beiden Abfolgen in genau einer Aktivität um ein vorgegebenes Maß unterscheiden. Insbesondere kann ein Abweichen einer Länge einer Fahrstrecke um 1 km erlaubt sein, um zwei Abfolgen als gleiches Muster zu erkennen, beispielsweise um Rundungsfehler zu berücksichtigen. In diesem Beispiel kann eine Abweichung einer Zahl um ±1 erlaubt sein, um zwei Abfolgen als gleiches Muster zu erkennen. Weiter kann ein Abweichen einer Art eines Haltens erlaubt sein, um zwei Abfolgen als gleiches Muster zu erkennen. In diesem Beispiel kann eine Änderung eines Buchstabens erlaubt sein, um zwei Abfolgen als gleiches Muster zu erkennen.

Ferner werden beispielsweise zwei Abfolgen von Aktivitäten als gleiches Muster erkannt, wenn genau eine Aktivität gegen drei Aktivitäten nach einer vorgegebenen Regel ausgetauscht ist. Beispielsweise kann ein Zwischenhalt erlaubt sein, wobei die Summe der Strecken direkt vor und nach dem Zwischenhalt gleich ist wie die Strecke ohne Zwischenhalt, um zwei Abfolgen als gleiches Muster zu erkennen. In diesem Beispiel kann es erlaubt sein, wenn eine erste Zahl durch zwei Zahlen und einen Buchstaben ausgetauscht ist, wobei die zwei Zahlen in Summe die erste Zahl ergeben, um zwei Abfolgen als gleiches Muster zu erkennen. Zum Beispiel können eine Abfolge, welche eine 10 umfasst, und eine andere Abfolge, welche statt der 10 die Folge 04-X-06 oder die Folge 03-R-07 oder ähnliches umfasst, als gleiches Muster erkannt werden.

Für zumindest einen Teil der erkannten Muster 8 wird das jeweilige Muster 8 anhand seiner Merkmale 10, insbesondere anhand seiner Häufigkeit, seiner Länge und/oder seiner Form, als ein bestimmter Streckenabschnitt 12 des Streckennetzes identifiziert.

Als Muster wird eine häufig wiederkehrende Abfolge von Aktivitäten, welche eine vorgegebene Mindestanzahl von Aktivitäten umfasst, erkannt. Diese häufig wiederkehrende Abfolge von Aktivitäten, welche eine vorgegebene Mindestanzahl von Aktivitäten umfasst, kann als eine Hauptstrecke des Streckennetzes identifiziert werden.

In diesem Beispiel werden die spiegelbildlichen Formen zur Identifizierung der Hauptstrecke nicht betrachtet. Von den übrigen zwei längsten erkannten Mustern wird das häufigste Muster als eine Hauptstrecke des Streckennetzes identifiziert. Auf diese Weise kann hier das Muster *05-R-03-L-02* als *Hauptstrecke* identifiziert werden. Die Hauptstrecke wird im Folgenden kursiv dargestellt.

Als Muster wird außerdem ein spiegelbildliches Muster, welches eine vorgegebene Mindestanzahl von Aktivitäten umfasst, erkannt. Ein Spiegelpunkt des spiegelbildlichen Musters wird ermittelt. Der Spiegelpunkt wird als ein Umkehrpunkt innerhalb des Streckennetzes identifiziert.

Hier wird beispielsweise das Muster 05-R-03-L-02-B-10-**R**-10-B-02-L-03-R-05 als spiegelbildliches Muster erkannt. Der Spiegelpunkt des spiegelbildlichen Musters liegt in der Mitte des spiegelbildlichen Musters und ist hier fett und unterstrichen hervorgehoben. Dieser Spiegelpunkt wird als Umkehrpunkt innerhalb des Streckennetzes identifiziert.

In diesem Beispiel wird also folgende Strecke identifiziert: 05-R-03-L-02-B-10-**R**.

Das Mustererkennungsverfahren erkennt weiter, dass letztgenannte Strecke die Hauptstrecke umfasst. Damit wird als Streckenabschnitt *05-R-03-L-02-*B-10-**R** erkannt.

Weiter wird beispielsweise das Muster B-02-L-03-R-05-**X**-05-R-03-L-02-B als spiegelbildliches Muster erkannt. Der Spiegelpunkt des spiegelbildlichen Musters liegt in der Mitte des spiegelbildlichen Musters und ist hier fett und unterstrichen hervorgehoben. Dieser Spiegelpunkt wird als Umkehrpunkt innerhalb des Streckennetzes identifiziert. Das Mustererkennungsverfahren erkennt weiter, dass letztgenannte Strecke die Hauptstrecke umfasst. Damit wird als Streckenabschnitt **X***-05-R-03-L-02-*B-10-**R** erkannt.

Falls unter Verwendung des Mustererkennungsverfahrens ein Teil einer Abfolge von Aktivitäten eindeutig einem bereits identifizierten Streckenabschnitt des Streckennetzes zugeordnet wird und ein zweiter Teil derselben Abfolge von dem bereits identifizierten Streckenabschnitt abweicht, wird der zweite Teil als eine Abzweigung von dem identifizierten Streckenabschnitt erkannt.

Bisher nicht zuordnenbare Abfolgen können dann unter Verwendung eines Sequenz Alignment Algorithmus, insbesondere eines Free Shift Alignments, nach und nach in das (teilweise) erzeugte Streckennetz eingefügt werden.

Beispielsweise konnte in diesem Beispiel die Abfolge 07-L-11-B-01-X nicht zugeordnet werden. Zum Free Shift Alignment wird eine längere Abfolge hergenommen, welche die nicht zugeordnete Abfolge enthält, und es wird ermittelt, an welche Stelle die längere Abfolge passt.

In diesem Beispiel wird die Abfolge R-03-L-02-B-07-L-11-B-01-X mit dem bereits identifizierten Streckenabschnitt **X**-05-R-*03-L-02*-B-10-**R** verglichen. Der Vergleich R-03-L-02-B-07-L-11-B-01-X mit **X***-05-R-03-L-02*-B-10-**R**
liefert, dass der erste Teil, nämlich R-03-L-02-B, der (längeren) Abfolge eindeutig einem bereits identifizierten Streckenabschnitt des Streckennetzes zugeordnet werden kann und der zweite Teil 07-L-11-B-01-X derselben Abfolge von dem bereits identifizierten Streckenabschnitt abweicht. Somit wird der zweite Teil 07-L-11-B-01-X als eine Abzweigung von dem identifizierten Streckenabschnitt erkannt.

Unter Verwendung des zumindest einen Merkmals 10 des jeweiligen Musters 8 und ggf. unter Verwendung eines Sequenz Alignment Algorithmus kann das Abbild 14 des Streckennetzes erzeugt werden. Auf diese Weise kann unter Verwendung der erkannten Muster das Abbild 14 des Streckennetzes erzeugt werden.

In diesem Beispiel lautet das Abbild 14 wie folgt:

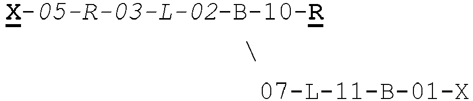

Gegebenenfalls kann das erzeugte Abbild 14 des Streckennetzes mit einer topografischen Karte verglichen werden. Anhand dieses Vergleichs können dem Halten des Schienenfahrzeugs in dem Abbild, welche hier durch Buchstaben codiert sind, Ortsnamen bzw. Bahnhofsnamen zugeordnet werden.

FIG 2 zeigt ein Flussdiagramm 16 über die Verwendung des Verfahrens aus FIG 1 zur Lokalisierung 20 des Schienenfahrzeugs zu einem vorgegebenen Zeitpunkt.

Eine (andere als die in FIG 1 genannte) Aktivitätenfolge 18 des Schienenfahrzeugs, welche eine bestimmte Anzahl an Aktivitäten um den vorgegebenen Zeitpunkt aufweist, wird mit dem in FIG 1 erstellten Abbild 14 des Streckennetzes verglichen. Anhand des Vergleichs wird das Schienenfahrzeug einem bestimmten Streckenabschnitt des Streckennetzes zugeordnet ("Lokalisierung 20" des Schienenfahrzeugs).

In diesem Beispiel lautet die letztgenannte Aktivitätenfolge 18 wie folgt:
B-11-L-07

Beispielsweise hat bei der letzten Aktivität "07", nämlich bei dem Fahren einer Fahrstrecke von 7 km, ein Vorfall stattgefunden und es soll ermittelt werden, wo dieser Vorfall stattgefunden hat. Die einzelne Aktivität zum Zeitpunkt des Vorfalls reicht nicht aus, um das Schienenfahrzeug zum Zeitpunkt des Vorfalls zu lokalisieren. Wird jedoch die letztgenannte Aktivitätenfolge 18 des Schienenfahrzeugs, welche eine bestimmte Anzahl an Aktivitäten um den vorgegebenen Zeitpunkt aufweist, mit dem in FIG 1 erzeugten Abbild 14 des Streckennetzes verglichen, so kann das Schienenfahrzeug lokalisiert werden ("Lokalisierung 20"), indem anhand des Vergleichs das Schienenfahrzeug einem bestimmten Streckenabschnitt des Streckennetzes zugeordnet wird.

Bei dem Vergleich der letztgenannte Aktivitätenfolge 18: B-11-L-07
mit dem erzeugten Abbild 14: 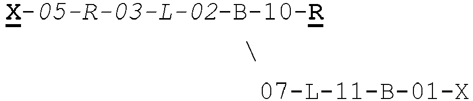 wird ermittelt, dass das Schienenfahrzeug zu dem Zeitpunkt des Vorfalls den Abzweig befahren hat und zu dem Zeitpunkt des Vorfalls auf dem ersten Abschnitt "07" des Abzweiges gefahren ist. Auch die Richtung des Schienenfahrzeugs kann anhand des Vergleichs bestimmt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Erzeugung eines Abbildes (14) eines Streckennetzes, welches von einem Schienenfahrzeug befahren wird, unter Verwendung von beim Befahren des Streckennetzes durch das Schienenfahrzeug aufgezeichneten und in einer Aktivitätenfolge (4) sortierten Aktivitäten,
bei dem
Muster (8) in der Aktivitätenfolge (4) unter Verwendung eines Mustererkennungsverfahrens erkannt werden und
unter Verwendung der erkannten Muster (8) das Abbild (14) des Streckennetzes erzeugt wird,
**dadurch gekennzeichnet, dass**
die Aktivitäten des Schienenfahrzeugs ein Halten des Schienenfahrzeugs und ein Fahren einer Fahrstrecke einer bestimmten Länge umfassen.

2. Verfahren nach Anspruch 1,
**dadurch gekennzeichnet, dass**
die Aktivitäten in der Aktivitätenfolge (4) nach einem vorgebbaren Kriterium sortiert vorliegen, insbesondere dass die Aktivitäten in der Aktivitätenfolge (4) zeitlich sortiert vorliegen.

3. Verfahren nach Anspruch 1 oder 2,
**dadurch gekennzeichnet, dass**
unter Verwendung des Mustererkennungsverfahrens für zumindest einen Teil der erkannten Muster (8) zumindest ein Merkmal (10) des jeweiligen Musters (8), nämlich eine Häufigkeit, eine Länge und/oder eine Form des jeweiligen Musters, ermittelt wird und
unter Verwendung des zumindest einen Merkmals (10) des jeweiligen Musters (8) das Abbild (14) des Streckennetzes erzeugt wird.

4. Verfahren nach einem der vorhergehenden Ansprüche, **dadurch gekennzeichnet, dass**
für zumindest einen Teil der erkannten Muster (8) das jeweilige Muster (8) anhand seiner Häufigkeit, seiner Länge und/oder seiner Form als ein bestimmter Streckenabschnitt (12) des Streckennetzes identifiziert wird.

5. Verfahren nach einem der vorhergehenden Ansprüche,
**dadurch gekennzeichnet, dass**
als Muster (8) eine häufig wiederkehrende Abfolge von Aktivitäten, welche eine vorgegebenen Mindestanzahl von Aktivitäten umfasst, erkannt wird und als eine Hauptstrecke des Streckennetzes identifiziert wird.

6. Verfahren nach einem der vorhergehenden Ansprüche,
**dadurch gekennzeichnet, dass**
als Muster (8) ein spiegelbildliches Muster (8), welches eine vorgegebenen Mindestanzahl von Aktivitäten umfasst, mit einem Spiegelpunkt erkannt wird und der Spiegelpunkt als ein Umkehrpunkt innerhalb des Streckennetzes identifiziert wird.

7. Verfahren nach einem der vorhergehenden Ansprüche,
**dadurch gekennzeichnet, dass**,
falls unter Verwendung des Mustererkennungsverfahrens ein Teil einer Abfolge von Aktivitäten eindeutig einem bereits identifizierten Streckenabschnitt (12) des Streckennetzes zugeordnet wird und ein zweiter Teil derselben Abfolge von dem bereits identifizierten Streckenabschnitt (12) abweicht, der zweite Teil als eine Abzweigung von der identifizierten Strecke erkannt wird.

8. Verfahren nach einem der vorhergehenden Ansprüche,
**dadurch gekennzeichnet, dass**
in der Aktivitätenfolge (4) die Aktivitäten durch alphanummerische Symbole codiert werden.

9. Verfahren nach einem der vorhergehenden Ansprüche,
**dadurch gekennzeichnet, dass**
das Mustererkennungsverfahren einen Sequenz Matching Algorithmus, insbesondere einen Sequenz Alignment Algorithmus, umfasst.

10. Verfahren nach einem der vorhergehenden Ansprüche,
**dadurch gekennzeichnet, dass**
das Mustererkennungsverfahren in einem vorgegebenen Maß Toleranzen erlaubt, sodass bereits ähnliche Abfolgen von Aktivitäten als gleiches Muster (8) erkannt werden.

11. Verfahren nach Anspruch 1,
**dadurch gekennzeichnet, dass**
das Halten des Schienenfahrzeugs ein Halten ohne ein Türöffnen, ein Halten mit einem Öffnen einer rechten Tür des Schienenfahrzeugs, ein Halten mit einem Öffnen einer linken Tür des Schienenfahrzeugs und/oder ein Halten mit einem Öffnen beider Türen des Schienenfahrzeugs sein kann.

12. Verwendung des Verfahrens nach einem der vorhergehenden Ansprüche zur Lokalisierung (20) des Schienenfahrzeugs zu einem vorgegebenen Zeitpunkt,
wobei eine weitere Aktivitätenfolge (18) des Schienenfahrzeugs, welche eine bestimmte Anzahl an Aktivitäten um den vorgegebenen Zeitpunkt aufweist, mit dem erstellten Abbild (14) des Streckennetzes verglichen wird und
anhand des Vergleichs das Schienenfahrzeug einem bestimmten Streckenabschnitt (12) des Streckennetzes zugeordnet wird.

13. Computerprogramm mit Befehlen, welche, wenn das Computerprogramm auf einem Computer ausgeführt wird, diesen veranlasst, das Verfahren nach einem der Ansprüche 1 bis 12 auszuführen.

14. Computerlesbares Speichermedium mit Befehlen, welche, wenn sie durch einen Computer ausgeführt werden, diesen Computer veranlassen, das Verfahren nach einem der Ansprüche 1 bis 12 auszuführen.

## Claims

1. Method for generating an image (14) of a route network travelled through by a rail vehicle using activities recorded when the rail vehicle is travelling through the route network and sorted into a sequence of activities (4),
in which
patterns (8) are recognized in the sequence of activities (4) using a pattern recognition method and
the image (14) of the route network is generated using the recognized patterns (8),
**characterized in that**
the activities of the rail vehicle comprise holding the rail vehicle and driving a distance of a certain length.

2. Method according to Claim 1,
**characterized in that**
the activities in the sequence of activities (4) are sorted according to a predefinable criterion, in particular **in that** the activities in the sequence of activities (4) are sorted by time.

3. Method according to Claim 1 or 2,
**characterized in that**,
using the pattern recognition method for at least some of the recognized patterns (8), at least one feature (10) of the respective pattern (8), specifically a frequency, a length and/or a form of the respective pattern, is determined and
the image (14) of the route network is generated using the at least one feature (10) of the respective pattern (8).

4. Method according to one of the preceding claims,
**characterized in that**,
for at least some of the recognized patterns (8), the respective pattern (8) is identified as a certain route section (12) of the route network based on the frequency, the length and/or the form thereof.

5. Method according to one of the preceding claims,
**characterized in that**
a frequently recurring sequence of activities that comprises a predefined minimum number of activities is recognized as a pattern (8) and is identified as a main route of the route network.

6. Method according to one of the preceding claims,
**characterized in that**
a mirror-image pattern (8) that comprises a predefined minimum number of activities with a point of symmetry is recognized as a pattern (8) and the point of symmetry is identified as a turning point within the route network.

7. Method according to one of the preceding claims,
**characterized in that**,
if, using the pattern recognition method, a part of a sequence of activities is definitely assigned to an already identified route section (12) of the route network and a second part of the same sequence deviates from the already identified route section (12), the second part is detected as a branch from the identified route.

8. Method according to one of the preceding claims,
**characterized in that**,
in the sequence of activities (4), the activities are encoded by alphanumeric symbols.

9. Method according to one of the preceding claims,
**characterized in that**
the pattern recognition method comprises a sequence matching algorithm, in particular a sequence alignment algorithm.

10. Method according to one of the preceding claims,
**characterized in that**
the pattern recognition method allows tolerances to a predefined degree, so that similar sequences of activities are already recognized as the same pattern (8).

11. Method according to Claim 1,
**characterized in that**
holding the rail vehicle may be holding without opening a door, holding with opening a right-hand door of the rail vehicle, holding with opening a left-hand door of the rail vehicle and/or holding with opening both doors of the rail vehicle.

12. Use of the method according to one of the preceding claims for the localization (20) of the rail vehicle at a predefined time,
wherein a further sequence of activities (18) of the rail vehicle that comprises a certain number of activities at the predefined time is compared with the image (14) of the route network that was drawn up, and
the rail vehicle is assigned to a specific route section (12) of the route network on the basis of the comparison.

13. Computer program containing commands that, when the computer program is executed on a computer, cause the computer to perform the method according to one Claims 1 to 12.

14. Computer-readable storage medium containing commands that, when executed by a computer, cause said computer to perform the method according to one of Claims 1 to 12.

## Revendications

1. Procédé de production d'une image (14) d'un réseau de voies, qui est emprunté par un véhicule ferroviaire, en utilisant des activités enregistrées lorsque le réseau de voies est emprunté par le véhicule ferroviaire et compilées en une suite (4) d'activités,
dans lequel on reconnaît des modèles (8) dans la suite (4) d'activités en utilisant un procédé de reconnaissance de modèle, et
en utilisant les modèles (8) reconnus, on produit l'image (4) du réseau de voies,
**caractérisé en ce que** les activités du véhicule ferroviaire comprennent un arrêt du véhicule ferroviaire et un parcours d'un itinéraire d'une longueur déterminée.

2. Procédé suivant la revendication 1,
**caractérisé en ce que**
les activités de la suite (4) d'activités se présentent de manière compilée suivant un critère pouvant être donné à l'avance, notamment **en ce que** les activités de la suite (4) d'activités se présentent en étant compilées en fonction du temps.

3. Procédé suivant la revendication 1 ou 2,
**caractérisé en ce que**
en utilisant le procédé de reconnaissance de modèle pour au moins une partie des modèles (8) reconnus, on détermine au moins une caractéristique (10) du modèle (8) respectif, à savoir sa fréquence, sa longueur et/ou sa forme et en utilisant la au moins une caractéristique (10) du modèle (8) respectif, on produit l'image (8) du réseau de voies.

4. Procédé suivant l'une des revendications précédentes,
**caractérisé en ce que**
pour au moins une partie du modèle (8) reconnu, on identifie le modèle (8) respectif à l'aide de sa fréquence, de sa longueur, et/ou de sa forme comme une section (12) de voie déterminée du réseau de voies.

5. Procédé suivant l'une des revendications précédentes,
**caractérisé en ce que**
on reconnaît comme modèle (8) une suite d'activités se répétant fréquemment, qui comprend un nombre minimum donné à l'avance d'activités et on l'identifie comme une voie principale du réseau de voies.

6. Procédé suivant l'une des revendications précédentes,
**caractérisé en ce que**
on reconnaît comme modèle (8) un modèle (8) symétrique comme en un miroir, qui comprend un nombre minimum donné à l'avance d 'activités, par un point de symétrie comme en un miroir, et on identifie le point de symétrie comme en un miroir comme un point de rebroussement dans le réseau de voies.

7. Procédé suivant l'une des revendications précédentes,
**caractérisé en ce que**
si en utilisant le procédé de reconnaissance de modèle, on associe une partie d'une suite d'activités d'une manière univoque à une section (12) de voie, déjà identifiée, du réseau de voies, et si une deuxième partie de la même suite s'écarte de la section (12) de voie déjà identifiée, on reconnaît la deuxième partie comme une bifurcation de la voie identifiée.

8. Procédé suivant l'une des revendications précédentes,
**caractérisé en ce que**
dans la suite (4) d'activités, on code les activités par des symboles alphanumériques.

9. Procédé suivant l'une des revendications précédentes,
**caractérisé en ce que**
le procédé de reconnaissance de modèle comprend un algorithme de matching de séquence, notamment un algorithme d'alignement de séquence.

10. Procédé suivant l'une des revendications précédentes,
**caractérisé en ce que**
le procédé de reconnaissance de modèle autorise dans une mesure donnée à l'avance des tolérances de manière à ce que des suites d'activités déjà semblables soient reconnues comme le même modèle (8).

11. Procédé suivant la revendication 1,
**caractérisé en ce que**
l'arrêt du véhicule ferroviaire peut être un arrêt sans ouverture de porte, un arrêt avec une ouverture d'une porte droite du véhicule ferroviaire, un arrêt avec une ouverture d'une porte gauche du véhicule ferroviaire et/ou un arrêt avec une ouverture des deux portes du véhicule ferroviaire.

12. Utilisation du procédé suivant l'une des revendications précédentes pour la localisation (20) du véhicule ferroviaire à un instant donné à l'avance,
dans lequel on compare à l'image (14) établie du réseau de voies une autre suite (18) d'activités du véhicule ferroviaire, qui a un nombre déterminé d'activités autour de l'instant donné à l'avance et,
à l'aide de la comparaison, on associe le véhicule ferroviaire à une section (12) de voie déterminée du réseau de voies.

13. Programme d'ordinateur ayant des instructions et, lorsque le programme d'ordinateur est réalisé sur un ordinateur, fait que celui-ci effectue le procédé suivant l'une des revendications 1 à 12.

14. Support de mémoire déchiffrable par ordinateur ayant des instructions, qui, lorsqu'elles sont exécutées par un ordinateur, font que cet ordinateur effectue le procédé suivant l'une des revendications 1 à 12.
